(19) Europäisches Patentamt
European Patent Office
Office européen des brevets

(11) Publication number: **0 348 859**
**A1**

(12) **EUROPEAN PATENT APPLICATION**

(21) Application number: 89111591.7

(51) Int. Cl.⁴: **C07F 9/10 , A61K 31/685**

(22) Date of filing: 26.06.89

(30) Priority: 01.07.88 IT 2118788
01.07.88 IT 2118888

(43) Date of publication of application:
03.01.90 Bulletin 90/01

(84) Designated Contracting States:
BE DE ES FR GB GR IT LU NL

(71) Applicant: MAGIS FARMACEUTICI S.p.A.
Via Cacciamali 34/36/38
I-25125 Brescia(IT)

(72) Inventor: Puricelli, Laura
Via Taramelli, 7
I-25100 Brescia(IT)

(74) Representative: Passini, Angelo et al
NOTARBARTOLO & GERVASI S. R. L. Viale
Bianca Maria, 33
I-20122 Milano(IT)

(54) **1,2-di-O-acyl glycero(DI)phosphate of L-carnitine and its derivatives, a process for their preparation and pharmaceutical formulations which contain them.**

(57) Di-O-acyl glycero (di) phosphate L-carnitine ester and its derivatives and the process for their preparation are described.

This compound is a useful therapeutic agent in the treatment of cardiac disturbances, dyslipemias and hyperlipoproteinemias, and in the treatment of slow cerebral metabolism.

EP 0 348 859 A1

# 1,2-DI-O-ACYL GLYCERO(DI)PHOSPHATE OF L-CARNITINE AND ITS DERIVATIVES, A PROCESS FOR THEIR PREPARATION AND PHARMACEUTICAL FORMULATIONS WHICH CONTAIN THEM.

## SUMMARY OF THE INVENTION

This invention relates to the ester of L-carnitine and its derivatives with the di-O-acyl derivative of α-glycero phosphoric and diphosphoric acid in its D, L or DL form, a process for their preparation and pharmaceutical compositions which contain them.

More particularly, the invention relates to the compounds of general formula (I):

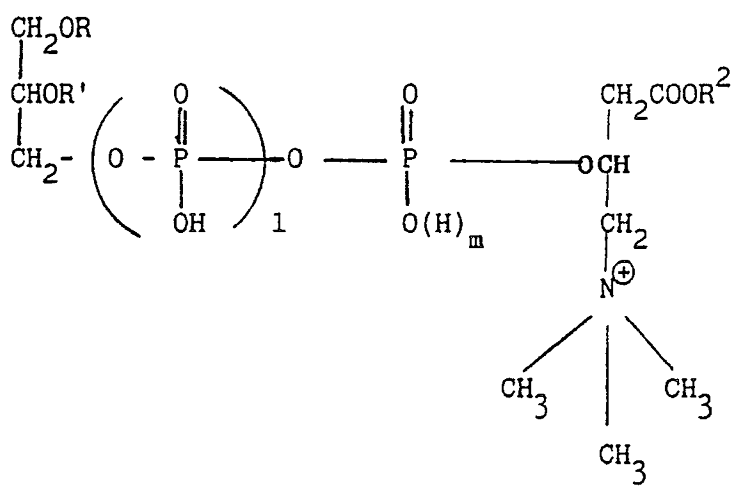

(I)

wherein R and R′, which can be identical or different, represent a saturated or unsaturated $C_2$-$C_{22}$ acid radical and $R^2$ is H or a $C_1$-$C_5$ alkyl radical; $X^-$ is the anion of a pharmaceutically acceptable acid such as HCl, phosphoric acid, bromic acid or sulphuric acid;
l is selected between 0 and 1
m and n are selected between 0 and 1 with the following proviso;
when m is 1, then n = 1
when m is 0, the oxygen atom carries an electronegative charge and n is 0

The compounds (I) are extremely effective therapeutic agents in the treatment of slow cerebral metabolism, senile and presenile psychomotor involution, depressive states, senile and pre-senile dementia, reduced cerebral blood flow, the sequelae of primitive cerebral ictus, and cardiac affections.

The present invention therefore also relates to pharmaceutical compositions containing a therapeutically effective quantity of active principle dissolved in and/or mixed with a pharmaceutically acceptable solid or liquid support normally used for these compositions.

Furthermore the present invention relates to a process for preparing the compounds having the general formula (I) comprising the following steps:

a) reacting the L-carnitine or an ester thereof having the general formula (III)

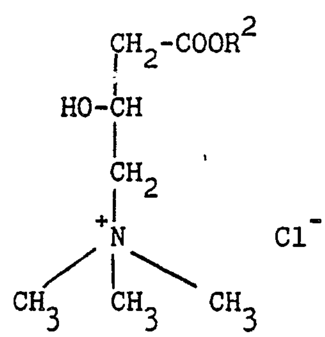

(III)

wherein $R^2$ has the above mentioned meanings with diphenyl phosphorylchloride (II)

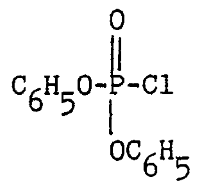

(II)

in pyridine to obtain the compound having the formula (IV)

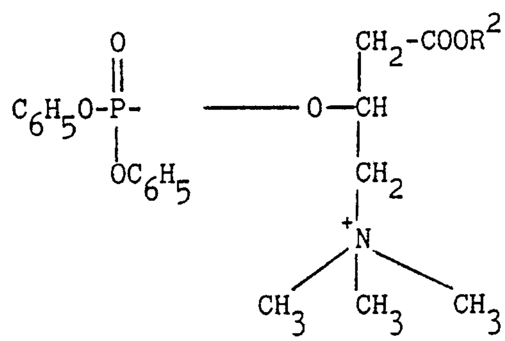

(IV)

b) hydrolyzing the compound of formula IV with barium hydroxide and $CO_2$ and converting the barium salt into the corresponding acid by adding a stoichiometric amount of sulphuric acid to obtain the compound of formula (V)

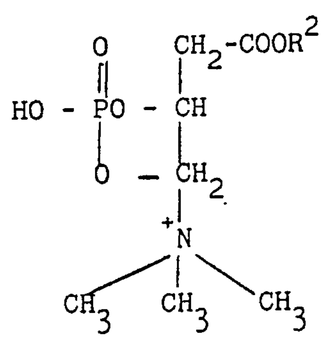

(V)

c) reacting the compound of formula (V) with a quaternary ammonium hydroxyde to obtain the corresponding ammonium salt of formula (VI)

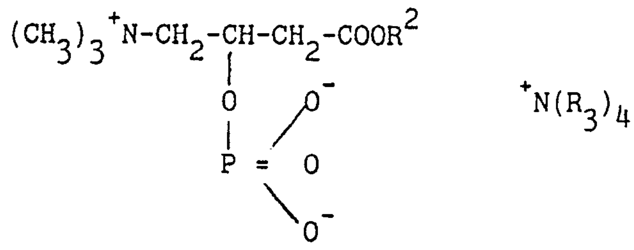

(VI)

wherein $R_3$ is a $C_1$-$C_5$ alkyl radical

d) reacting the compound of formula (VI) with the glycerol derivative having the formula (VII)

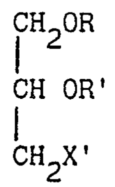

(VII)

wherein R and $R^1$ have the above mentioned meanings to obtain X′ can be chlorine, bronine or iodine the compound of formula (I) having l = 0

or

c′) reacting the compound of formula (V) with morpholine and dicyclohexylcarbodiimide to obtain thempound of formula

(VIII)

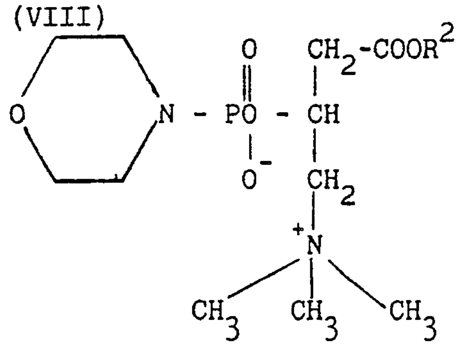

(VIII)

d′) reacting the compound of formula (VIII) with a di-O-acylglycero-3-phosphate of formula (IX)

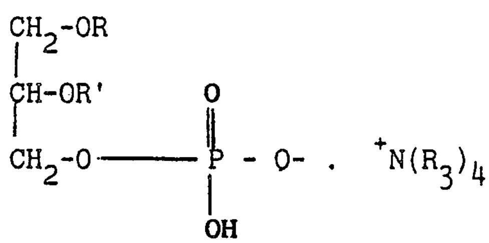

(IX)

wherein $R^3$ has the above mentioned meanings to obtain the compound of formula (I) having l = 1

DETAILED DESCRIPTION OF THE INVENTION

A preferred embodiment of the process according to the present invention for preparing the compounds (I) having I = 0 are prepared in accordance with the scheme given hereinafter by reacting the tetramethyl ammonium salt (VI) of L-carnitine phosphoric ester or a derivative thereof with the 3-halo derivative of 1,2-di-O-acyl glycerol (VII).

The L-carnitine phosphoric ester or derivative thereof (V) is obtained by reaoting L-carnitine or an ester thereof (II) with diphenylphosphoryl chloride (III) in pyridine and, after eliminating the pyridine, hydrolysing the resultant diphenyl phosphoryl L-carnitine (IV) by treatment with a barium hydroxide solution.

After eliminating the excess barium hydroxyde with carbon dioxide and extracting the formed phenol with ether, the barium salt is converted into the respective acid by stoichiometric addition of sulphuric acid.

The 3-halo derivative of 1,2-di-O-acyl glycerol (VII) is obtained by reacting a $C_2$-$C_{22}$ organic acid anhydride or a mixture of these anhydrides in the presence of pyridine with 3-halo glycerol, or alternatively by reacting organic acid chlorides with 3-halo glycerol.

The preferred synthesis proceeds in accordance with the following scheme:

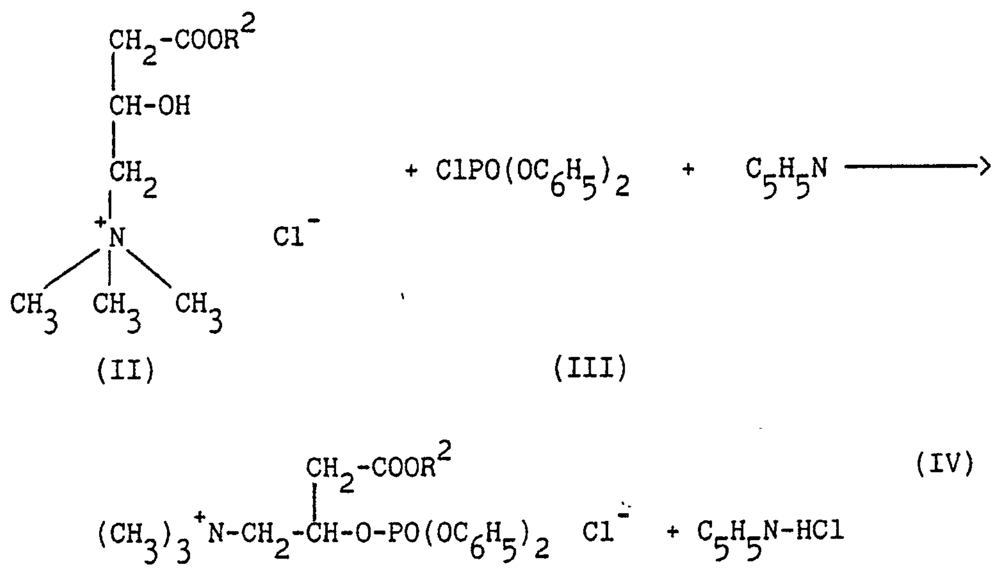

(II) (III)

(IV)

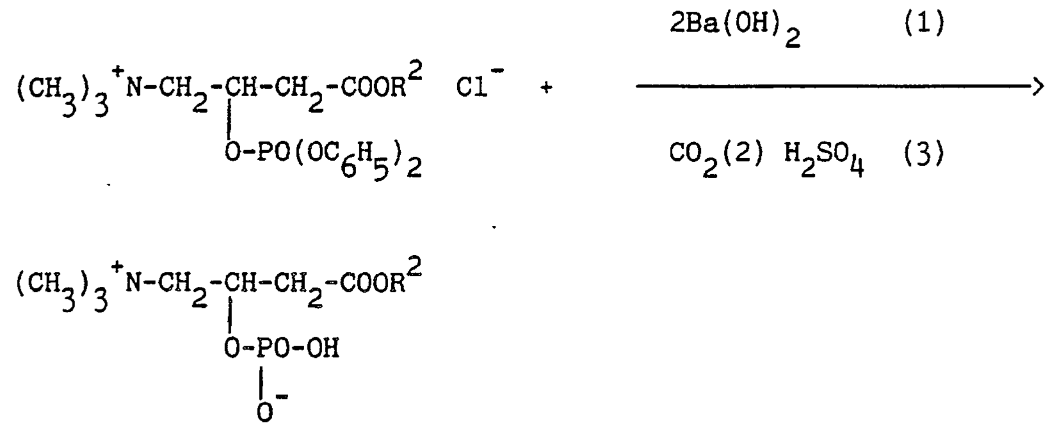


(V)

where $R^2$ represents H or a $C_1$-$C_5$ alkyl radical

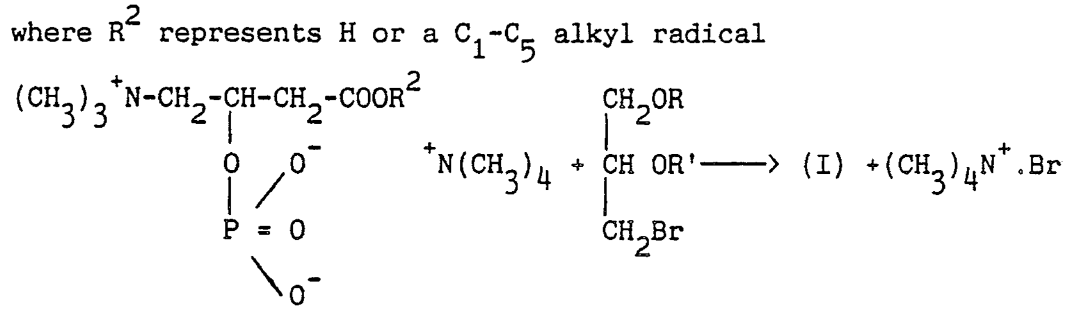

(VI) (VII)

R and R′ can be identical or different and are preferably palmitoyl, stearoyl, palmitoloyl, oleoyl, linoleoyl.

The compounds (I) are purified through a silica column.

A preferred embodiment of the process according to the present invention for preparing the compounds of general formula (I) having l = 1 consists (see the reaction scheme) of reacting the tetramethyl ammonium salt of 1,2-di-O-acyl glycero-3-phopsphoric acid (IX) with L-carnitine ester phosphoromorpholidate (VIII)

The di-O-acyl glycero-3-phosphate is (IX) obtained by reacting a $C_2$-$C_{22}$ organic acid anhydride or a mixture of these anhydrides in the presence of pyridine with α-glycero phosphopric acid, or alternatively by reacting corresponding organic acid chlorides with -glycero phosphoric acid.

The preferred process is implemented in accordance with the following reaction scheme:

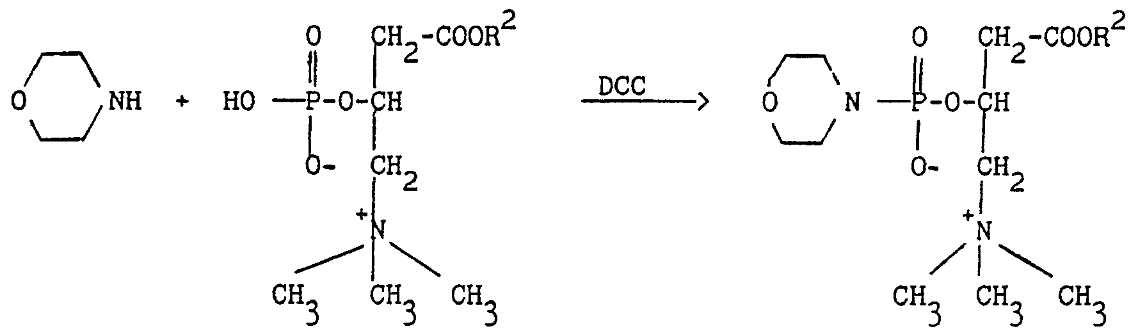


(V) (VIII)

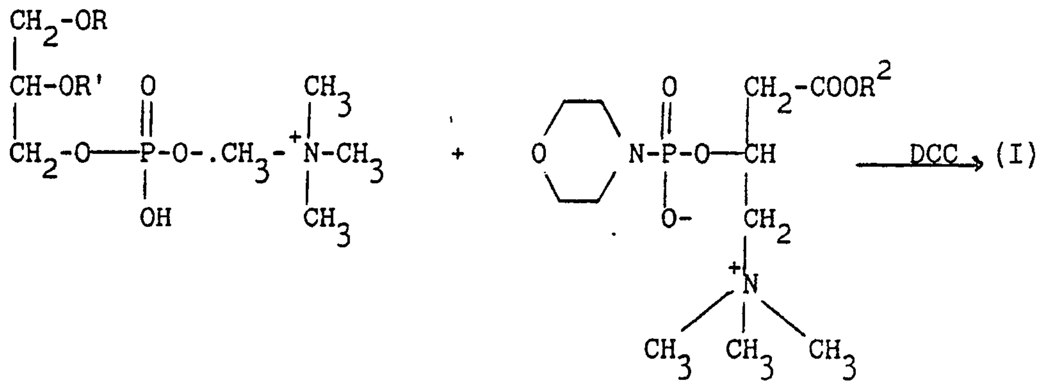


(IX) (VIII)

wherein R and R′ equal or different are preferably selected among palmatoloyl, oleoyl, linoleoyl
DCC = dicyclohexylcarbodiimide

The compounds (I) are purified through a Dowex column in formate form.

The compounds having m = 1 and n = 1 are prepared through conventional method of salts preparation, by reacting the compound obtained with the processes above described with the corresponding acids.

As stated, the compounds (I) of the present invention are extremely effective therapeutic agents in the treatment of various pathologies such as slow cerebral metabolism, senile and pre-senile psychomotor involution,depressive states, senile and pre-senile dementia, reduced cerebral blood flow, the sequelae of primitive cerebral ictus, and cardiac affections. Said compounds can be administered orally or by intramuscular injection.

For oral administration a non-toxic pharmaceutical composition can be prepared by mixing the active substance with the supports normally used for this purpose, such as starch, glucose, gelatin, magnesium stearate, glyceryl monostearate, talc, sodium chloride, propyleneglycol, ethanol etc.

The final products are therefore in capsule, tablet, pill, single-dose sachet or extemporaneous suspension or emulsion form.

In the case of injectable formulations, the active principle is dissolved in liquids suitable for forming vials, while if suppositories are to be prepared then adjuvants suitable for this purpose are used.

For details of such supports, diluents, excipients or adjuvants, reference should be made to L.G. Goodman, H.Gilman, The Pharmacological Basis of Therapeutics.

In the treatment of slow cerebral metabolism, senile and pre-senile psychomotor involution, depressive states, senile and pre-senile dementia, reduced cerebral blood flow, the sequelae of primitive cerebral ictus, cerebral ischemia or cardiac affections, the compound according to the invention can be administered in quantities ranging from 1 to 50 mg/kg per day in doses separated in time, such as three or four times per day.

The pharmaceutical compositions of the invention can be administered for example in posological units containing for example 50, 100, 250, 1000 and 1500 mg of active principle together with physiologically suitable excipients.

The pharmaco-biological characteristics of the new compounds according to the present invention were evaluated with particular reference to acute toxicity, cardiokinetic activity, antiarrhythmic activity, their

effects in terms of modifying the lipoprotein and hyper-excitability states and their capacity to return cholesterol and triglyceride levels to normal values.

The acute toxicity of the compounds of general formula (I) was tudied on the mouse by the Weal method (C.S Weal, Biomed.J. 249, 1952).

The $LD_{50}$ of said compounds exceeds 2000 mg/kg in the mouse.

The cardiokinetic effect was studied on a Langerdoff isolated rabbit heart preparation.

The tests show that said compounds have a positive inotropic effect calculated 10 minutes after interrupting the anoxic period.

The antiarrhythmic effect was studied on the mouse by the procedure of P.W.N. Wangow and T.Holcow (P.W.N. Wangow, T.L. Holcow, Arch. Int. Pharmacodin. 224, 219, 1977).

The results show a beneficial effect on arrhythmia induced by aconitine (5 /ml).

The effect of the compounds (I) in terms of modifying the lipoprotein state and the cholesterol and triglyceride levels, altered by oral administration of olive oil, was studied in normally fed rats treated orally with 15 mg/kg of olive oil, said compounds being administered at 300 mg/kg doses.

The compounds proved able to return the triglyceride and cholesterol levels to normal values.

The activity of the compounds (I) on the hyperexcitability state and on clonic contractions followed by depression induced by injection into the cerebellomedullary cistern of rats was studied by the method descirbed by Irwing B. Frity in "Carnitine and its role in fatty acid metabolism" in "Advances in lipid research" I, 285-234, (1963) Academic Press.

Intracerebroventricular administration of said compounds causes pupil dilation and markedly increased activity.

The following examples illustrate the invention but do not limit it.

EXAMPLE 1 L-carnitine phosphoric ester (IV)

150 ml of glass balls (6 mm diameter), 150 ml of anhydrous pyridine, 28.8 g of diphenylphosphoryl chloride (II) and 19.75 g of L-carnitine hydrochloride (III) are transferred into a 500 ml flask fitted with a stirrer and calcium chloride tube.

The mixture is stirred for two days at ambient temperature.

The mixture is then transferred into 150 ml of water and ice and then evaporated in a rotary flask until a dense syrup forms (bath temperature 45-50 °C).

The distillation residue is dissolved in 430 ml of water, and after adding 140 g of barium hydroxide (octahydrate) and 0.5 ml of octyl alcohol the mixture is heated under reflux for 75 minutes.

After this time a vigorous stream of carbon dioxide is passed through until the solution becomes neutral to phenolphthaleine. The solution is filtered and 10% sulphuric acid added to the filtrate to pH 6.0.

The precipitate is filtered off and the filtrate evaporated to dryness in a rotary flask (bath temperature 40-45 °C).

The residue is crystallized from ethanol.

About 20 g of L-carnitine phosphoric ester are obtained.

Spectral analyses confirm the structure.

| Elementary analysis | C | H | N | P |
|---|---|---|---|---|
| calculated %<br>found % | 34.85<br>34.9 | 6.638<br>6.65 | 5.8<br>5.6 | 12.86<br>12.7 |

**M.W. 241**

EXAMPLE 2 1,2-di-O-palmitoyl-3-bromoglycerol (VII)

15.50 g of 3-bromo-1,2-propanediol are transferred into a 500 ml flask fitted with a stirrer and reflux condenser, together with 150 ml of pyridine and 100 g of palmitic anhydride. The mixture is stirred for 10 hours at 40 °C.

200 ml of water are added and the mixture distilled under vacuum (bath temperature 40-45 °C).

The residue is taken up in 200 ml of chloroform and 100 ml of a saturated sodium chloride solution

containing 5% of sodium carbonate.

The mixture is stirred and the organic phase separated.

A second extraction is carried out and the organic phase dried with anhydrous sodium sulphate and evaporated to dryness under vacuum. About 60 g of product are obtained.

Spectrographic analyses confirm the structure.

| Elementary analysis | C | H | Br |
|---|---|---|---|
| calculated %<br>found % | 66.56<br>67 | 10.6<br>10.6 | 12.67<br>12.7 |

M.W. 631

EXAMPLE 3 1,2-di-O-(palmitoyl, stearoyl, palmitoloyl, oleoyl, linoleoyl)-3-bromoglycerol (VII)

15.5 g of 3-bromo-1,2-propanediol are transferred into a 500 ml flask fitted with a stirrer and reflux condenser, together with 60 g of a mixture of organic acid chlorides [the chlorides of palmitic acid (11.7%), stearic acid (4.0%), palmitoleic acid (8.6%), oleic acid (9.8%), linoleic acid (59%) ], and the mixture heated to 4° C for three hours.

After this time the mixture is cooled and 200 ml of chloroform added. The chloroform solution is extracted twice with 100 ml of a saturated sodium chloride solution containing 5% of sodium carbonate in solution.

The chloroform solution is dried with anhydrous sodium sulphate and evaporated to dryness under vacuum. About 60 g of product are obtained.

Instrumental and gas chromatographic analyses confirm the structure.

EXAMPLE 4

Using the procedure of Examples 2 and 3 the 3-bromo glycerol derivatives of various organic acids and organic acid mixtures are obtained.

EXAMPLE 5 L-carnitine 1,2-di-O-palmitoyl glycerophosphate (I) having I = 0

5.418 g of L-carnitine phosphoric ester are dissolved in 150 ml of a methanolic solution containing 20% of tetramethylammonium hydroxide.

The solution is evaporated to dryness under vacuum (bath temperature about 40° C).

500 ml of acetonitrile and 13.1 g of 1,2-di-O-palmitoyl-3-bromoglycerol are added to the residue.

The mixture is heated under reflux for 5-6 hours.

After removing the solvent under vacuum the residue is taken up in 300 ml of water acidified with 5 ml of concentrated hydrochloric acid and extracted with ether (3 x 100 ml)

The ether extracts are washed with water (3 x 50 ml) and dried with anhydrous sodium sulphate after removing the ether.

The residue is taken up in 50 ml of chloroform and transferred to a silica column. Elution is carried out with a chloroform-methanol (9:1) mixture and the various obtained fractions separated.

The fraction containing the pure product is evaporated to dryness under vacuum. 12 g of product are obtained.

Spectrographic analyses confirm the structure.

| Elementary analysis | C | H | N | P |
|---|---|---|---|---|
| calculated %<br>found % | 63.75<br>63.6 | 10.49<br>9.9 | 1.77<br>1.7 | 3.9<br>3.8 |

M.W. 791
rotatory power $[\alpha]^{20}$
D = 6.2

EXAMPLE 6

Using the procedure of Example 5, the di-O-acyl glycerophosphate derivatives of L-carnitine ester are obtained, the acyl radical being a $C_2$-$C_{22}$ organic acid or a mixture of these acids.

EXAMPLE 7 1,2-di-O-palmitoyl-3-glycerophosphate (IX)

17.202 g of α-glycerophosphoric acid are transferred into a 500 ml flask fitted with a stirrer and reflux condenser, together with 150 ml of pyridine and 100 g of palmitic anhydride. The mixture is stirred for 10 hours at 40° C.

200 ml of water are added and the mixture distilled under vacuum (bath temperature 40-45° C).

The residue is taken up in 200 ml of chloroform and 100 ml of a saturated sodium chloride solution.

The mixture is stirred and the organic phase separated.

The chloroform solution is washed with water, the chloroform phase separated and dried with anhydrous sodium sulphate, and then evaporated to dryness under vacuum. About 61 g of product are otained.

Spectrographic analyses confirm the structure.

| Elementary analysis | C | H | P |
|---|---|---|---|
| calculated %<br>found % | 64.784<br>64.8 | 10.718<br>10.8 | 4.7726<br>4.7 |

M.W. 648.91

EXAMPLE 8 1,2-di-O-(palmitoyl, stearoyl, palmitoloyl, oleoyl, linoleoyl)-3-glycerophosphate (IX)

17.202 g of α-glycerophosphoric acid are transferred into a 500 ml flask fitted with a stirrer and reflux condenser, together with 60 g of a mixture of organic acid chlorides [the chlorides of palmitic acid (11.7%), stearic acid (4.0%), palmitoleic acid (8.6%), oleic acid (9.8%), linoleic acid (59%) ], and the mixture heated to 40° C for three hours.

The mixture is cooled and 200 ml of chloroform added. The chloroform solution is extracted twice with 100 ml of a saturated sodium chloride solution.

The chloroform solution is separated and dried with anhydrous sodium sulphate and evaporated to dryness under vacuum. About 61 g of product are obtained.

Instrumental and gas chromatographic analyses confirm the structure.

EXAMPLE 9

Using the procedure of Examples 2 and 3 the 3-glycerophosphate derivatives of various $C_2$-$C_{22}$ organic acids and of various mixtures of these organic acids are obtained.

EXAMPLE 10 1,2-di-O-palmitoyl-glycero diphosphate-L-carnitine of formula (I) (having l = 1)

5.418 g of L-carnitine phosphoric ester (IV) obtained according to Example 1 are dissolved in 150 ml of a methanolic solution containing 20% of tetramethylammonium hydroxide.

A) L-carnitine phosphoromorpholidate (VIII)

A solution of 20.6 g of dicyclohexylcarbodiimide (D.C.C.) in 375 ml of t-butyl alcohol is added dropwise to a stirred solution, heated under reflux, of 7.5 g of L-carnitine in a mixture 250 ml of water, 250 ml of tert.butyl alcohol and 8.71 ml of purified morpholine.

The addition is completed in 3-4 hours, after which the mixture is further heated under reflux until eletrophoretic analysis shows a spot with different mobility than the L-carnitine phosphoric ester.

If starting material remains, 10.3 g of D.C.C. and 4.4 ml of morpholine are added to the solution and heating is continued under reflux until a single chromatographic spot remains.

The mixture is then cooled to ambient temperature and the crystalline material is removed by filtration and washed with tertiary butyl alcohol.

The filtrate is evaporated under vacuum until the tertiary butyl alcohol is eliminated, the remaining aqueous phase being then extracted three times with ether (filtration is necessary after the first extraction).

The solution is then evaporated to dryness under vacuum.

The residue is dissolved in 120 ml of methyl alcohol, the solution possibly filtered and concentrated under vacuum to about 90 ml.

1000 ml of ether are slowly added to the stirred methanol solution. The precipitate which forms is ground and oven-dried under vacuum.

B) 1,2-di-O-palmitoyl-3-glycerodiphosphate-L-carnitine ester

64.89 g of 1,2-di-O-palmitoyl-3-glycerophosphate are transferred into a 500 ml flask.

91.2 ml of a 20% solution of tetramethylammonium hydroxide in methanol are added.

The mixture is stirred until dissolved and the solution evaporated to dryness by distilling off the solvent under vacuum.

The L-carnitine phosphoromorpholidate prepared in A) is added to the residue. The mixture is dissolved in distilled o-chlorophenol (1000 ml), 1000 ml of anhydrous pyridine are added to the obtained solution and the mixture left in an environment protected from light for 4 days.

The pyridine is eliminated under vacuum, 1000 ml of water are added and the O-chlorophenol eliminated with chloroform.

The aqueous solution is adjusted to pH 9.5 with ammonia and directly transferred to a column (5 x 150 cm) of Dowex 1 x4 (formate) (200-400 mesh).

The column is washed with water to remove the L-carnitine phosphoric ester and is then eluted with a 0.01 M formic acid solution to separate the 1,2-di-O-palmitoyl-3-diphosphate-L-carnitine ester (the separation is monitored by thin-layer chromatography).

The solution containing 1,2-di-O-palmitoyl-3-diphosphate-L-carnitine ester is coevaporated with ethanol to dryness.

About 20 g of product are obtained.

Spectral analyses confirm the structure.

| Elementary analysis | C | H | N | P |
|---|---|---|---|---|
| calculated %<br>found % | 57.8<br>57.5 | 9.63<br>9.7 | 1.60<br>1.62 | 7.11<br>7.15 |

M.W. 872

EXAMPLE 11

Using the procedure of Example 10, the di-O-acyl derivatives of glycerodiphosphate L-carnitine ester are obtained, in which the acyl radical is of a $C_2$-$C_{22}$ organic acid or of a mixture of these acids.

## Claims

1) 1,2-di-O-acyl glycero(di)phosphate of L carnitine and its esters having the general formula (I)

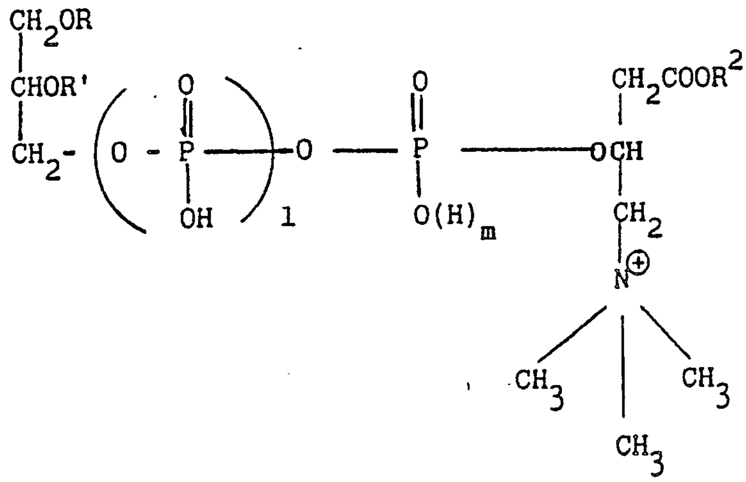

(I)

wherein R and R′ identical or different represent a saturated or unsaturated $C_2$-$C_{22}$ acid radical and $R^2$ is H, or a $C_1$-$C_5$ alkyl radical $X^-$ is a pharmacologically acceptable acid selected from chlorhydric acid, phosphoric acid, bromic acid or sulphuric acids.
l is selected between 0 and 1
m and n or can be 0 or 1 with the following proviso
when m is 1 then n = 1
when m is 0, the Oxygen atom carries an electro-negative charge then n is 0.

2) A process for preparing the 1,2-di-O-acyl glycero(di)phosphate according to claim 1, comprising the following steps:

a) reacting the L carnitine or an ester thereof having the general formula (III)

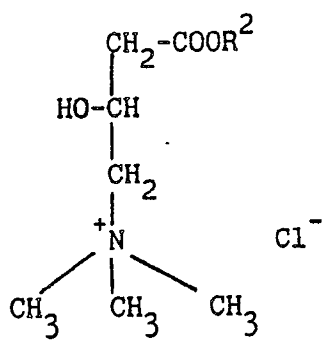

(III)

wherein $R^2$ has the above mentioned meanings, with diphenylphosphorylchloride (II)

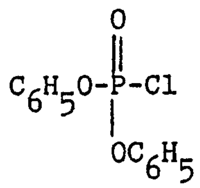

(II)

in pyridine to obtain the compounds of formula (IV)

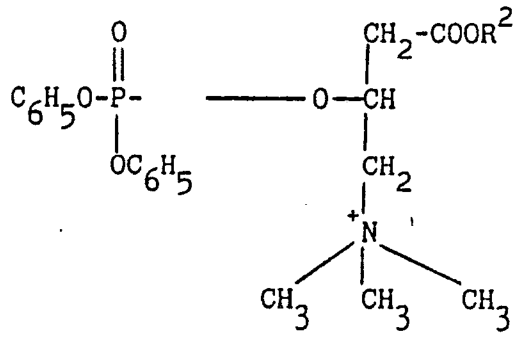

(IV)

b) hydrolizing the conpound of formula (IV) with barium hydroxide and $CO_2$ and converting the barium salt into the corresponding acid by adding a stoichiometric amount of sulphuric acid to obtain the compoud of formula (V)

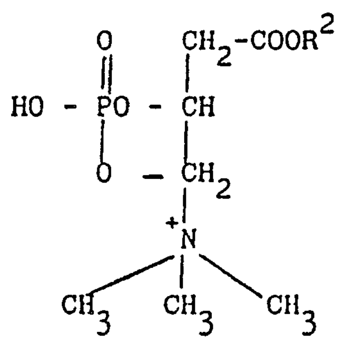

(V)

c) reacting the compound of formula (V) with tetraalkyl ammonium hydroxide to obtain the corresponding tetraalkylammonium salt of formula (VI)

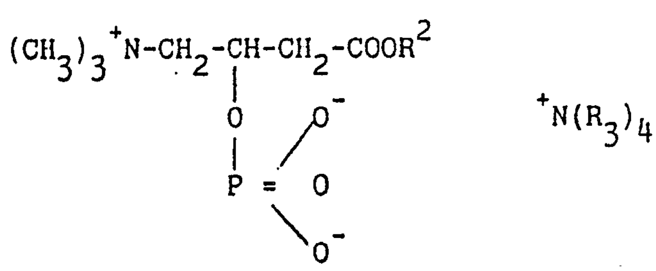

(VI)

wherein $R^3$ is a $C_1$ - $C_5$ alkyl radical.

d) reacting the compound of formula (VI) with the glycerol derivative having the formula (VII)

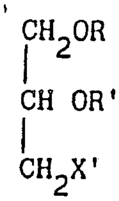

(VII)

wherein X′ can be chlorine bromine or iodine, R and R′ identical or different represent a saturated or unsaturated $C_2$-$C_{22}$ acid radical to obtain the compound of formula (I) having l = 0

or

c′) reacting the compound of formula (V) with morpholine and dicyclohexylcarbodiimide to obtain the compound of formula (VIII)

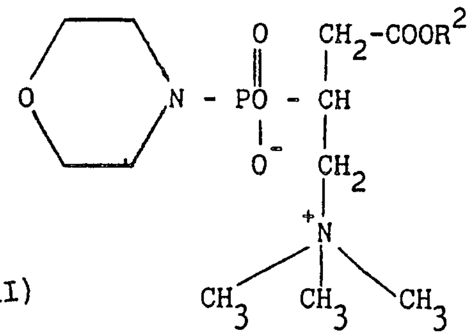

(VIII)

d′) reacting the compound of formula (VIII) with a salt of di-O-acylglycero-3-phosphate of formula (IX)

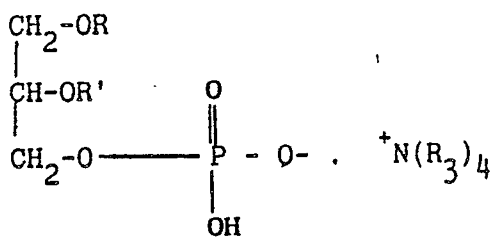

(IX)

to obtain the compound of formula (I) characterized by having l = 1

3) Pharmaceutical compositions for treating cardiac malfunctions, hyperlipoproteinemias, dyslipemias and slow cerebral metabolism, comprising a therapeutically effective quantity of the compound claimed in claim 1, in association with pharmacologically acceptable supports and adjuvants.

4) The pharmaceutical compositions according to claim 3, for oral or intramuscular administration.

5) The pharmaceutical compositions according to claim 3 containing from 50 to 1.500 mg of active priciple.

6) A therapeutic method for the treatment of slow cerebral metabolism, senile and pre-senile dementia, reduced cerebral blood flow caused by primitive cerebral ictus, cerebral ischemia or cardiac affections by administering in stepped doses the pharmaceutical compositions according to claim 3, so that the contained active principle ranges from 1 to 50 mg/kg per day.

European Patent Office

# EUROPEAN SEARCH REPORT

Application Number

EP 89 11 1591

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | LIPIDS, vol. 10, no. 1, 1975, pages 20-24, American Oil Chemists'Society, Champaign, Illinois, US; U. HINTZE et al.: "Synthesis and properties of phosphatidyl carnitine and phosphatidyl beta-methylcholine" * Whole article * --- | 1,2 | C 07 F 9/10<br>A 61 K 31/685 |
| A | WO-A-8 705 024 (LPB ISTITUTO CHEMIOTERAPICO DI LODI) * Whole document * --- | 1,3-6 | |
| A | GB-A-2 057 872 (LPB ISTITUTO FARMACEUTICO S.p.A.) * Whole document * ----- | 1,3-6 | |
| | | | TECHNICAL FIELDS SEARCHED (Int. Cl.5) |
| | | | C 07 F 9/00<br>A 61 K 31/00 |

The present search report has been drawn up for all claims

| Place of search | Date of completion of the search | Examiner |
|---|---|---|
| THE HAGUE | 26-09-1989 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)